# EUROPÄISCHE PATENTANMELDUNG

(11) **EP 2 894 704 A1**
(43) Veröffentlichungstag der Anmeldung: **15.07.2015**
(21) Anmeldenummer: 14150622.0
(22) Anmeldetag: 09.01.2014
(51) Int. Cl.: H01M 8/02, H01M 8/04, H01M 8/24

(54) **Brennstoffzelleneinheit**

(71) Anmelder: Siemens Aktiengesellschaft, 80333 München (DE)
(72) Erfinder: Hammerschmidt, Albert, Dr., 91056 Erlangen (DE); Mattejat, Arno, Dr., 91056 Erlangen (DE)

(57) **Zusammenfassung**

Die Erfindung betrifft eine Brennstoffzelleneinheit (2) mit zumindest einem von einem Fluid durchströmbaren Raum (6, 12, 14), welcher mittels einer Primärdichtung (8) gegenüber seiner Umgebung abgedichtet ist. Ferner betrifft die Erfindung ein Verfahren zur Leckageüberwachung der Brennstoffzelleneinheit (2).

Um eine platzsparende Leckageüberwachung der Brennstoffzelleneinheit (2) zu ermöglichen, wird vorgeschlagen, dass die Primärdichtung (8) von einer Sekundärdichtung (10) umgeben ist, sodass zwischen der Primärdichtung (8) und der Sekundärdichtung (10) ein Überwachungsraum (16) ausgebildet ist, welcher durch die Primärdichtung (8) und die Sekundärdichtung (10) begrenzt ist und mittels der Sekundärdichtung (10) gegenüber seiner Umgebung abgedichtet ist.

Außerdem wird vorgeschlagen, dass mittels eines Messgeräts eine Messgröße des Überwachungsraums (16), insbesondere ein Druck oder eine Brennmittelkonzentration im Überwachungsraum (16), gemessen wird, um die Brennstoffzelleneinheit (2) auf einfache Weise auf eine Leckage hin überwachen zu können.

## Beschreibung

Die Erfindung betrifft eine Brennstoffzelleneinheit mit zumindest einem von einem Fluid durchströmbaren Raum, welcher mittels einer Primärdichtung gegenüber seiner Umgebung abgedichtet ist.

Als Brennstoffzelleneinheit kann eine Einheit aufgefasst werden, die zumindest eine Brennstoffzelle, vorzugsweise eine Mehrzahl über-/nebeneinander angeordneter Brennstoffzellen, umfasst. Ferner kann zumindest ein Kühlmittelraum, welcher an die zumindest eine Brennstoffzelle angrenzt, ein Bestandteil der Brennstoffzelleneinheit sein.

Eine solche Brennstoffzelleneinheit ist in der Regel in mehrere Räume unterteilt, die von unterschiedlichen Fluiden (Brennmittel, Oxidationsmittel oder Kühlmittel) durchströmbar sind. Diese Räume sind üblicherweise mit Hilfe von Dichtungen gegeneinander bzw. gegenüber ihrer Umgebung abgedichtet, um eine unkontrollierte Durchmischung der Fluide untereinander oder ein Austreten der Fluide in die Umgebung zu verhindern. Allerdings können zwischen den Dichtungen und Bauteilen der Brennstoffzelleneinheit, an welche die Dichtungen angrenzen, Leckagen vorliegen.

Aus Sicherheitsgründen kann es kritisch sein, wenn ein die Brennstoffzelleneinheit durchströmendes Brennmittel aufgrund einer Leckage in die Umgebung gelangt oder sich unkontrolliert mit einem die Brennstoffzelleneinheit durchströmenden Oxidationsmittel vermischt. Denn das Brennmittel kann sich dabei unter Umständen mit dem die Brennstoffzelleneinheit umgebenden Medium ("Umgebungsmedium") bzw. mit dem Oxidationsmittel zu einem explosionsfähigen Gemisch vermischen, sodass die Gefahr einer Explosion bestehen kann.

Unter dem Brennmittel kann ein Stoff verstanden werden, dessen gespeicherte Energie sich in einer Redoxreaktion in nutzbare, insbesondere elektrische Energie umwandeln lässt. Als Brennmittel kann z.B. Wasserstoff oder ein Wasserstoff enthaltender Stoff, wie z.B. Methan oder Methanol, zum Einsatz kommen. Unter dem Oxidationsmittel kann ein Stoff verstanden werden, der in einer Redoxreaktion reduziert wird und dabei einen anderen Stoff (z.B. das Brennmittel) oxidiert. Als Oxidationsmittel kann beispielsweise Sauerstoff in einem Gasgemisch, wie z.B. Luft, oder in reiner Form verwendet werden.

Um ein Ausbilden eines explosionsfähigen Gemischs zu verhindern, kann die Brennstoffzelleneinheit mit einem starken Gas-/Luftstrom umströmt werden. Zusätzlich zu einem solchen Umströmen oder, falls das Umströmen z.B. aus konstruktiven Gründen nicht möglich ist, alternativ dazu, kann die Brennstoffzelleneinheit auf eine Leckage hin überwacht werden.

Eine erste bekannte Methode, die Brennstoffzelleneinheit auf eine Leckage hin zu überwachen, ist, in der Umgebung der Brennstoffzelleneinheit Sensoren anzuordnen, mit denen ein Austritt des Brennmittels aus der Brennstoffzelleneinheit detektiert werden kann. Bei Detektion des Brennmittels kann eine vorgegebene Reaktion ausgelöst werden. Diese vorgegebene Reaktion kann z.B. umfassen, eine Brennmittelzufuhr zur Brennstoffzelleneinheit zu unterbinden und/oder die Umgebung der Brennstoffzelleneinheit mit einem Spülgas, insbesondere mit Luft oder einem inerten Gas, zu spülen. Das Spülen mit dem Spülgas kann bewirken, dass das Brennmittel bei seinem Austritt so weit verdünnt wird, dass sich kein explosionsfähiges Gemisch ausbildet.

Bei einer zweiten bekannten Methode ist die Brennstoffzelleneinheit in einem Gehäuse angeordnet und es wird ein Inneres des Gehäuses mittels eines Sensors oder eines Druckmessgeräts auf eine Leckage hin überwacht. Bei einer Detektion des Brennmittels bzw. im Falle eines Druckanstiegs im Gehäuse kann auch bei dieser Methode eine vorgegebene Reaktion ausgelöst werden. Bei der zweiten Methode kann die vorgegebene Reaktion, analog zur vorgegebenen Reaktion bei der ersten Methode, u.a. umfassen, das Gehäuse mit einem Spülgas zu spülen und/oder die Brennmittelzufuhr zur Brennstoffzelleneinheit zu unterbinden.

Die zur Durchführung dieser Methoden notwendigen Vorrichtungen benötigen Platz. So sind z.B. bei der ersten Methode viele Sensoren notwendig, die möglichst gleichmäßig um die Brennstoffzelleneinheit herum angeordnet sind, um einen möglichst kurzen Strömungsweg von einer möglichen Leckage zum Sensor zu realisieren und so eine Leckage frühzeitig erkennen zu können. Weiterhin benötigen mit den Sensoren verbundene Elemente, wie z.B. Strom-/Datenleitungen, Platz. Bei der zweiten Methode benötigt vor allem das Gehäuse, gemessen an der Brennstoffzelleneinheit, viel Platz.

Es ist eine Aufgabe der vorliegenden Erfindung, eine Brennstoffzelleneinheit anzugeben, die platzsparend auf eine Leckage hin überwacht werden kann.

Diese Aufgabe wird durch eine Brennstoffzelleneinheit der eingangs genannten Art gelöst, bei welcher erfindungsgemäß die Primärdichtung von einer Sekundärdichtung umgeben ist, sodass zwischen der Primärdichtung und der Sekundärdichtung ein Überwachungsraum ausgebildet ist, welcher durch die Primärdichtung und die Sekundärdichtung begrenzt ist und mittels der Sekundärdichtung gegenüber seiner Umgebung abgedichtet ist.

Unter dem Überwachungsraum kann ein Raum der Brennstoffzelleneinheit verstanden werden, der mittels geeigneter Messgeräte darauf hin überwacht werden kann, ob der zumindest eine von einem Fluid durchströmbare Raum der Brennstoffzelleneinheit eine Leckage aufweist.

Als Primärdichtung wird vorliegend eine Dichtung bezeichnet, die dazu vorgesehen ist, den vom Fluid durchströmbaren Raum gegenüber seiner Umgebung abzudichten, insbesondere unmittelbar abzudichten. Als Sekundärdichtung wird dagegen vorliegend eine zusätzliche Dichtung bezeichnet, die dazu vorgesehen ist einen anderen als den vom Fluid durchströmbaren Raum, wie z.B. den Überwachungsraum, gegenüber dessen Umgebung abzudichten.

Die Erfindung geht von der Überlegung aus, dass die Brennstoffzelleneinheit eine platzsparende Leckageüberwachung dadurch ermöglicht, dass der Überwachungsraum in der Brennstoffzelleneinheit selbst integriert ist. Dadurch kann darauf verzichtet werden, die Brennstoffzelleneinheit in einem Gehäuse anzuordnen oder eine Vielzahl gleichmäßig um die Brennstoffzelleneinheit angeordneter Sensoren zum Überwachen der Umgebung der Brennstoffzelleneinheit vorzusehen.

Ferner geht die Erfindung von der Überlegung aus, dass, falls der zumindest eine vom Fluid durchströmbare Raum eine Leckage aufweist, das Fluid zunächst in einen abgeschlossenen Raum eintritt, nämlich in den mittels der Sekundärdichtung abgedichteten Überwachungsraum der Brennstoffzelleneinheit. Dadurch kann erreicht werden, dass das Fluid, insbesondere das Brennmittel, erst dann in die Umgebung der Brennstoffzelleneinheit gelangt und somit in Kontakt mit einer potentiellen Zündquelle kommen kann, wenn zusätzlich zur Primärdichtung auch die Sekundärdichtung eine Leckage aufweist.

Zum Verdünnen desjenigen Teils des Brennmittels, der aus einem vom Brennmittel durchströmbaren Raum austritt, kann der Überwachungsraum mittels eines Spülgases gespült werden. Der Überwachungsraum weist ein kleines Volumen auf, bezogen auf Innenvolumina typischer Gehäuse für Brennstoffzelleneinheiten bzw. bezogen auf typische durch bauliche Maßnahmen vorgegebene Umgebungsvolumina von Brennstoffzelleneinheiten. Daher kann zum Spülen des Überwachungsraums bereits ein kleinerer Volumenstrom als zum Spülen des Gehäuses bzw. der Umgebung der Brennstoffzelleneinheit ausreichend sein.

Vorzugsweise umfasst die zumindest eine Brennstoffzelle der Brennstoffzelleneinheit zwei Kollektorplatten. Zweckmäßigerweise begrenzen die Kollektorplatten die Brennstoffzelle. Ferner können die Kollektorplatten als mechanische Träger von Bauteilen der Brennstoffzelle vorgesehen sein.

Zweckmäßigerweise weist die zumindest eine Brennstoffzelle eine Membran-Elektroden-Einheit auf, die zwischen den Kollektorplatten der Brennstoffzelle angeordnet ist. Unter der Membran-Elektroden-Einheit kann eine Einheit aus zwei Elektroden (einer Anode und einer Kathode) sowie zumindest einer zwischen den Elektroden angeordneten, insbesondere semipermeablen Membran verstanden werden.

Der zumindest eine vom Fluid durchströmbare Raum kann ein Brennmittelraum sein, der von einem Brennmittel durchströmbar ist. Durch eine Überwachung des Überwachungsraums kann in diesem Fall eine Leckage des Brennmittelraums feststellbar sein. Als Brennmittelraum kann derjenige Raum aufgefasst werden, in dem das Brennmittel oxidiert wird. Die Oxidation erfolgt dabei vorzugsweise katalytisch an der Anode.

Der zumindest eine vom Fluid durchströmbare Raum kann aber auch ein Oxidationsmittelraum sein, der von einem Oxidationsmittel durchströmbar ist. In diesem Fall kann durch eine Überwachung des Überwachungsraums eine Leckage des Oxidationsmittelraums feststellbar sein. Als Oxidationsmittelraum kann derjenige Raum aufgefasst werden, in dem das Oxidationsmittel reduziert wird. Die Reduktion erfolgt dabei vorzugsweise katalytisch an der Kathode.

Ferner kann der zumindest eine vom Fluid durchströmbare Raum ein Kühlmittelraum sein, der von einem Kühlmittel durchströmbar ist. Durch eine Überwachung des Überwachungsraums kann in diesem Fall eine Leckage des Kühlmittelraums feststellbar sein. Unter dem Kühlmittel kein ein Stoff bzw. Stoffgemisch zum Abtransport von Wärme verstanden werden. Als Kühlmittel kann z.B. Wasser verwendet werden.

Weiterhin kann der zumindest eine vom Fluid durchströmbare Raum ein Versorgungskanal oder ein Entsorgungskanal sein, der vom Kühlmittel, Brennmittel oder Oxidationsmittel durchströmbar ist. Hierdurch wird ermöglicht, durch eine Überwachung des Überwachungsraums eine Leckage des Ver-/Entsorgungskanals festzustellen. Als Versorgungskanal kann ein Durchgang zum Zuleiten des Kühl-, Brenn- oder Oxidationsmittels zu der zumindest einen Brennstoffzelle der Brennstoffzelleneinheit aufgefasst werden. Entsprechend kann als Entsorgungskanal ein Durchgang zum Ableiten des Kühl-, Brenn- oder Oxidationsmittels aus der zumindest einen Brennstoffzelle aufgefasst werden.

Die Kollektorplatten der zumindest einen Brennstoffzelle können Prägungen aufweisen. Die Prägungen können z.B. rillenförmige Strukturen ausbilden, die zweckmäßigerweise senkrecht vom Ver-/Entsorgungskanal abzweigen und Öffnungen zum Einleiten des im Ver-/Entsorgungskanal transportierten Fluids in einen vorgesehenen Raum der Brennstoffzelleneinheit aufweisen.

In bevorzugter Weise umfasst die Brennstoffzelleneinheit drei solcher Versorgungskanäle. Sinnvollerweise umfasst die Brennstoffzelleneinheit auch drei solcher Entsorgungskanäle. Ein erster der drei Versorgungskanäle kann vom Kühlmittel durchströmbar sein. Ein zweiter der drei Versorgungskanäle kann vom Brennmittel durchströmbar sein. Der dritte der drei Versorgungskanäle kann vom Oxidationsmittel durchströmbar sein. Entsprechendes gilt sinnvollerweise für die drei Entsorgungskanäle.

Die Brennstoffzelleneinheit kann mehrere, vorzugsweise zumindest neun, solcher von einem Fluid durchströmbare Räume aufweisen. Es ist zweckmäßig, wenn zumindest einer dieser mehreren Räume ein Versorgungskanal ist. Vorzugsweise sind drei dieser mehreren Räume Versorgungskanäle. Weiter ist es zweckmäßig, wenn zumindest einer dieser mehreren Räume ein Entsorgungskanal ist. In bevorzugter Weise sind drei dieser mehreren Räume Entsorgungskanäle. Zumindest ein weiterer der mehreren Räume kann ein Kühlmittelraum sein. Ferner kann zumindest ein weiterer dieser mehreren Räume ein Brennmittelraum sein. Weiterhin kann zumindest ein weiterer dieser mehreren Räume ein Oxidationsmittelraum sein.

Zweckmäßigerweise weist jede Brennstoffzelle der Brennstoffzelleneinheit einen Brennmittelraum und einen Oxidationsmittelraum auf. Umfasst die Brennstoffzelleneinheit mehrere Brennstoffzellen, kann jeweils zwischen zwei benachbarten Brennstoffzellen ein Kühlmittelraum vorgesehen sein. Dadurch kann ein gegenseitiges Aufheizen benachbarter Brennstoffzellen reduziert werden.

Es ist zweckmäßig, wenn die Brennstoffzelleneinheit genau drei Versorgungs- sowie genau drei Entsorgungskanäle aufweist, und zwar unabhängig von der Anzahl ihrer Brennstoffzellen. Denn mittels eines einzelnen Versorgungskanals können mehrere, vorzugsweise alle, Brennstoffzellen gleichzeitig mit dem in diesem Kanal geförderten Fluid versorgt werden und mittels eines einzelnen Entsorgungskanals kann das Fluid aus mehreren, vorzugsweise allen, Brennstoffzellen entsorgt werden. Sinnvollerweise bilden die drei Versorgungs- und drei Entsorgungskanäle Kanalpaare aus je einem Ver- und einem Entsorgungskanal. Dabei kann ein erstes der drei Kanalpaare zum Transportieren des Brennmittels, ein zweites der drei Kanalpaare zum Transportieren des Oxidationsmittels und ein drittes der drei Kanalpaare zum Transportieren des Kühlmittels vorgesehen sein.

In einer vorteilhaften Ausgestaltung ist eine zumindest Prüföffnung vorgesehen. Der Überwachungsraum kann durch die Prüföffnung mit seiner Umgebung, d.h. mit der Umgebung der Brennstoffzelleneinheit, verbunden sein. Zweckmäßigerweise ist die Prüföffnung in der Sekundärdichtung angeordnet. Dadurch kann der Überwachungsraum mittels eines Messgeräts von seiner Umgebung aus bzw. von der Umgebung der Brennstoffzelleneinheit aus überwacht werden.

In einer weiteren vorteilhaften Ausgestaltung ist zumindest eine Verbindungsöffnung vorgesehen. Vorteilhafterweise ist der Überwachungsraum durch die zumindest eine Verbindungsöffnung mit zumindest einem weiteren Überwachungsraum der Brennstoffzelleneinheit verbunden. Dadurch wird ein Stoffaustausch zwischen mehreren Überwachungsräumen der Brennstoffzelleneinheit ermöglicht. Dies wiederum ermöglicht auf einfache Weise ein gleichzeitiges Spülen oder Überwachen mehrerer solcher Überwachungsräume. Vorzugsweise ist die Verbindungsöffnung in einer der Kollektorplatten der zumindest einen Brennstoffzelle angeordnet.

Zweckmäßigerweise ist an der Verbindungsöffnung zumindest ein Messgerät, insbesondere ein Druckmessgerät oder ein Gassensor, angeschlossen. Unter einem Gassensor kann eine Vorrichtung zur Detektion einer gasförmigen Substanz, insbesondere zum Messen einer Konzentration der gasförmigen Substanz, verstanden werden. Das Messgerät kann mittelbar, z.B. über eine Rohrleitung, oder unmittelbar an der Verbindungsöffnung angeschlossen sein.

Das Messgerät kann mit einem Auswertegerät verbunden sein, z.B. über eine Datenleitung. Das Auswertegerät wiederum kann mit einem elektrisch steuerbaren Ventil einer Brennmittel-Versorgungsleitung verbunden sein, z.B. über eine weitere Datenleitung. Zweckmäßigerweise ist das Auswertegerät zum Steuern des Ventils der Brennmittel-Versorgungsleitung vorbereitet. Dies ermöglicht, dass das Auswertegerät ein Schließen der Brennmittel-Versorgungsleitung bewirken kann. Ferner kann das Auswertegerät auch mit einem elektrisch steuerbaren Ventil einer Oxidationsmittel-Versorgungsleitung und/oder mit einem elektrisch steuerbaren Ventil einer Kühlmittel-Versorgungsleitung verbunden sein und zum Steuern dieses Ventils/dieser Ventile vorbereitet sein. Dies ermöglicht, dass das Auswertegerät ein Schließen der Oxidationsmittel-Versorgungsleitung und/oder Kühlmittel-Versorgungsleitung bewirken kann.

Es können auch mehrere Messgeräte an der Verbindungsöffnung angeschlossen sein. Die Messgeräte können dabei seriell oder parallel an der Verbindungsöffnung angeschlossen sein. Der Gassensor kann alternativ zum Druckmessgerät oder zusätzlich zum Druckmessgerät zum Einsatz kommen. Ferner können mehrere Gassensoren zum Einsatz kommen, z.B. ein Gassensor zur Detektion des Brennmittels und ein Gassensor zur Detektion des Oxidationsmittels. Zusätzlich kann ein Sensor zur Detektion des Kühlmittels zum Einsatz kommen.

In einer vorteilhaften Ausgestaltung weist die Brennstoffzelleneinheit mehrere solcher Verbindungsöffnungen auf. Eine Pumpe kann eingangsseitig an einer ersten solchen Verbindungsöffnung angeschlossen sein. Ausgangsseitig kann die Pumpe an einer zweiten solchen Verbindungsöffnung angeschlossen sein. Mit Hilfe der Pumpe kann eine Umwälzung einer Atmosphäre des Überwachungsraums erreicht werden. Durch den Anschluss der Pumpe an die erste sowie an die zweite Verbindungsöffnung wird ein in sich geschlossener Kreislauf beim Umwälzen der Atmosphäre des Überwachungsraums ermöglicht. Dies hat den Vorteil, dass mögliche Zündquellen nicht in unmittelbaren Kontakt mit der Atmosphäre des Überwachungsraums kommen.

Alternativ kann an der ersten Verbindungsöffnung eine Spülgaszufuhrleitung zum Spülen des Überwachungsraums angeschlossen sein. Zweckmäßigerweise ist in diesem Fall an der zweiten Verbindungsöffnung eine Spülgasabfuhrleitung angeschlossen, über die das Spülgas aus der Brennstoffzelleneinheit absaugbar ist. Zum Spülen des Überwachungsraums kann ein gegenüber dem Brennmittel inertes Gas, z.B. Stickstoff oder ein Edelgas, verwendet werden.

Um bei Vorliegen einer Leckage einem Austritt des Brenn-/Oxidationsmittels aus einem vom Brenn-/Oxidationsmittel durchströmbaren Raum entgegenzuwirken, kann der Überwachungsraum mittels des Spülgases mit einem Druck beaufschlagt werden, der größer ist als ein Druck in dem vom Brenn-/Oxidationsmittel durchströmbaren Raum.

Weist die Brennstoffzelleneinheit mehrere Brennstoffzellen auf, so sind die beiden Verbindungsöffnungen, an denen die Pumpe angeschlossen ist bzw. die Spülgaszufuhrleitung und die Spülgasabsaugung angeschlossen sind, vorteilhafterweise Verbindungsöffnungen unterschiedlicher Brennstoffzellen. Diese beiden Verbindungsöffnungen können im Bereich räumlich diagonal gegenüberliegender Ecken der Brennstoffzelleneinheit angeordnet sein. Dadurch wird eine gleichmäßige Umwälzung bzw. ein gleichmäßiges Spülen der Überwachungsraum-Atmosphäre ermöglicht.

In bevorzugter Weise ist die Primärdichtung als ein Dichtrahmen ausgestaltet. Vorzugsweise ist auch die Sekundärdichtung als ein Dichtrahmen ausgestaltet. Als Dichtrahmen kann eine Dichtung, insbesondere eine aus einem Elastomer bestehende Dichtung, mit einer konzentrisch angeordneten Öffnung aufgefasst werden. Aber auch eine rahmenförmig ausgestaltete Schweißnaht, die als Dichtung dient, kann als Dichtrahmen aufgefasst werden. Zweckmäßigerweise ist der Dichtrahmen flach, gemessen an seiner lateralen Ausdehnungen. Der Dichtrahmen kann z.B. eine rechteckige Form aufweisen. Alternativ kann der Dichtrahmen ringförmig (als "O-Ring") ausgestaltet sein.

Die Primär-/Sekundärdichtung kann im Wesentlichen aus einem spritzgegossenen Elastomer bestehen. Elastomere haben eine höhere Elastizität und verformen sich unter Druckeinwirkung stärker als viele andere Materialien. Dadurch kann bei einer Verpressung zweier abzudichtender Bauteile der Brennstoffzelleneinheit unter Zwischenlage einer Elastomer-Dichtung eine hohe Dichtheit erreicht werden.

Eine solche aus einem spritzgegossenen Elastomer bestehende Primär-/Sekundärdichtung kann unmittelbar auf eine der Kollektorplatten der Brennstoffzelleneinheit aufgespritzt sein. Dadurch kann ein Zusammenbau der Brennstoffzelleneinheit vereinfacht werden, da ein Platzieren der Dichtung auf der Kollektorplatte entfällt.

Die Primär-/Sekundärdichtung kann aber auch durch eine Schweißnaht ausgebildet sein. Umfasst die Brennstoffzelleneinheit mehrere Brennstoffzellen, sind benachbarte Kollektorplatten zweier benachbarter Brennstoffzellen zweckmäßigerweise miteinander verschweißt. Die Primär-/Sekundärdichtung kann insbesondere durch eine Schweißnaht ausgebildet sein, die solche benachbarte, miteinander verschweißte Kollektorplatten verbindet.

Ferner betrifft die Erfindung ein Verfahren zur Leckageüberwachung der Brennstoffzelleneinheit.

Eine weitere Aufgabe der Erfindung ist, ein Verfahren anzugeben, mit dem die Brennstoffzelleneinheit auf einfache Weise auf eine Leckage hin überwacht werden kann.

Diese Aufgabe wird durch ein Verfahren gelöst, bei dem erfindungsgemäß mittels eines Messgeräts eine Messgröße des Überwachungsraums, insbesondere ein Druck oder eine Brennmittelkonzentration im Überwachungsraum, gemessen wird.

Das Messgerät kann z.B. das zuvor erwähnte Druckmessgerät oder der zuvor erwähnte Gassensor sein. In bevorzugter Weise ist das Messgerät mit dem zuvor erwähnten Auswertegerät verbunden. Zweckmäßigerweise wird die gemessene Messgröße mittels des Auswertegeräts mit einem Schwellwert verglichen, der im Auswertegerät hinterlegt ist.

Als Schwellwert kann ein maximal zulässiger Wert der Messgröße verwendet werden. Der Schwellwert kann von der Art des verwendeten Brennmittels, Oxidationsmittels und/oder Umgebungsmediums abhängig sein. So kann der Schwellwert z.B. ein gewisser Prozentsatz einer unteren Explosionsgrenze für ein vorgegebenes Gemisch aus dem Brennmittel, dem Oxidationsmittel und/oder dem Umgebungsmedium sein. Der Schwellwert kann aber auch z.B. ein vorgegebener, insbesondere von einer Temperatur der Brennstoffzelleneinheit abhängiger Druck sein. Zum Ermitteln der Temperatur der Brennstoffzelleneinheit kann ein Temperatursensor vorgesehen sein.

Vorteilhaferweise wird das elektrisch steuerbare Ventil der Brennmittel-Versorgungsleitung derart vom Auswertegerät angesteuert, dass das Ventil geschlossen wird, sobald die Messgröße den Schwellwert überschreitet. Dadurch kann bei einer Leckage ein Ansteigen der Brennmittelkonzentration auf einen unzulässig hohen Wert verhindert werden.

Weiter ist es vorteilhaft, wenn das elektrisch steuerbare Ventil der Oxidationsmittel-Versorgungsleitung derart vom Auswertegerät angesteuert wird, dass das Ventil geschlossen wird, sobald die Messgröße den Schwellwert überschreitet. Hierdurch kann bei einer Leckage ein fortwährender Verbrauch des Oxidationsmittels verhindert werden.

Da es nach einem Verschließen der Brennmittel-Versorgungsleitung nicht mehr zu einer Redoxreaktion zwischen dem Brennund dem Oxidationsmittel kommt, wird folglich keine Abwärme erzeugt. Sinnvollerweise wird daher auch das elektrisch steuerbare Ventil der Kühlmittel-Versorgungsleitung derart vom Auswertegerät angesteuert, dass dieses Ventil geschlossen wird, sobald die Messgröße den Schwellwert überschreitet.

Ferner können mehrere Messgeräte zum Einsatz kommen, z.B. ein Druckmessgerät sowie ein Gassensor zur Detektion des Brennmittels. Alternativ oder zusätzlich zum Druckmessgerät kann ein Gassensor zur Detektion des Oxidationsmittels zum Einsatz kommen.

Mittels dieser mehreren Messgeräte können mehrere unterschiedliche Messgrößen ermittelt werden. Jede dieser mehreren Messgrößen kann vom Auswertegerät mit jeweils einem anderen Schwellwert verglichen werden. Vorzugsweise können die elektrisch steuerbaren Ventile derart vom Auswertegerät angesteuert werden, dass eines oder mehrere der Ventile geschlossen werden, sobald eine der mehreren Messgrößen ihren zugehörigen Schwellwert überschreitet.

Um besonderen Sicherheitsanforderungen Rechnung zu tragen, kann ein zweistufiges Verfahren vorgesehen sein. So kann die Brennstoffzelleneinheit z.B. in einem Gehäuse, insbesondere einem explosionssicherem Gehäuse, angeordnet sein. Zusätzlich zur Überwachung des Überwachungsraums kann ein Inneres des Gehäuses mit den bekannten, eingangs beschriebenen Methoden überwacht werden.

Die bisher gegebene Beschreibung vorteilhafter Ausgestaltungen enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit der erfindungsgemäßen Vorrichtung und/oder dem erfindungsgemäßen Verfahren kombinierbar.

Die oben beschriebenen Eigenschaften, Merkmale und Vorteile der Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Schnitt durch eine Brennstoffzelleneinheit senkrecht zu einer Stapelrichtung ihrer Brennstoffzellen,
- FIG 2: einen Schnitt durch die Brennstoffzelleneinheit entlang der in FIG 1 dargestellten Schnittebene II,
- FIG 3: einen Schnitt durch die Brennstoffzelleneinheit entlang der in FIG 1 dargestellten Schnittebene III,
- FIG 4: einen Schnitt durch die Brennstoffzelleneinheit entlang der in FIG 1 dargestellten Schnittebene IV,
- FIG 5: einen Schaltplan zur Leckageüberwachung der Brennstoffzelleneinheit mittels einer Pumpe und eines Gassensors,
- FIG 6: einen Schaltplan zur Leckageüberwachung der Brennstoffzelleneinheit mittels eines Druckmessgeräts,
- FIG 7: einen Schaltplan zur Leckageüberwachung der Brennstoffzelleneinheit mittels einer Pumpe und eines Druckmessgeräts,
- FIG 8: einen Schaltplan zur Leckageüberwachung der Brennstoffzelleneinheit mittels eines Gassensors, bei der eine Spülung eines Überwachungsraums vorgesehen ist,
- FIG 9: einen Schnitt durch eine weitere Brennstoffzelleneinheit senkrecht zu einer Stapelrichtung ihrer Brennstoffzellen und
- FIG 10: einen Schnitt durch die Brennstoffzelleneinheit aus FIG 9 entlang der in FIG 9 dargestellten Schnittebene X.

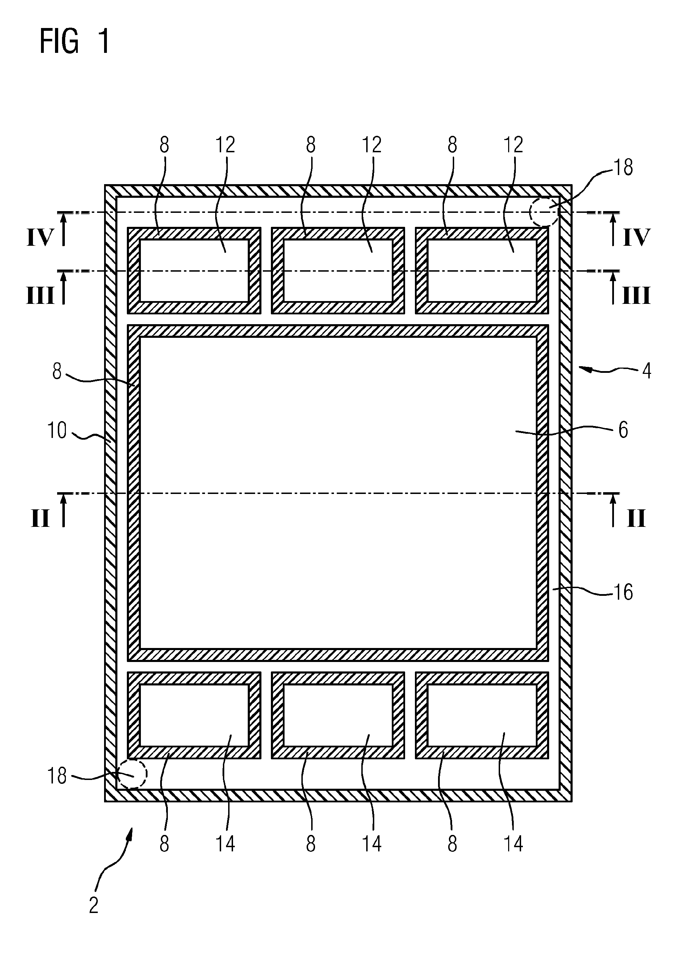

In den Figuren 1 bis 10 abgebildete Elemente sind schematisch dargestellt. Ferner sind die Elemente nicht notwendigerweise maßstabsgetreu dargestellt.

FIG 1 zeigt einen Schnitt durch eine Brennstoffzelleneinheit 2, die eine Vielzahl übereinander angeordneter ("gestapelter") Brennstoffzellen 4 umfasst, wobei die Brennstoffzellen 4 senkrecht zur Zeichenebene gestapelt sind, sodass in FIG 1 lediglich eine der Brennstoffzellen 4 zu sehen ist.

Jede der Brennstoffzellen 4 umfasst einen von einem Brennmittel durchströmbaren Brennmittelraum sowie einen von einem Oxidationsmittel durchströmbaren Oxidationsmittelraum. Außerdem ist jeweils zwischen zwei Brennstoffzellen 4 ein von einem Kühlmittel durchströmbarer Kühlmittelraum angeordnet. Sämtliche Brennmittel-, Oxidationsmittel- und Kühlmittelräume der Brennstoffzelleneinheit sind parallel zueinander ausgerichtet. Der abgebildete Schnitt verläuft exemplarisch längs eines Brennmittelraums 6, sodass in FIG 1 weder ein Oxidationsmittelraum noch ein Kühlmittelraum zu erkennen sind. Ein Schnitt, der längs eines Oxidationsmittelraums oder eines Kühlmittelraums verliefe, würde prinzipiell genauso aussehen wie der in FIG 1 dargestellte Schnitt, nur dass anstelle des Brennmittelraums 6 der Oxidationsmittelraum bzw. der Kühlmittelraum dargestellt wäre.

Aus FIG 1 ist ersichtlich, dass der Brennmittelraum 6 von einer Primärdichtung 8 begrenzt, mittels welcher der Brennmittelraum 6 gegenüber seiner Umgebung abdichtet ist. Weiterhin ist diese Primärdichtung 8 von einer Sekundärdichtung 10 umgeben.

Die Brennstoffzelleneinheit 2 umfasst sechs Kanäle 12, 14. Drei der sechs Kanäle 12, 14 sind Versorgungskanäle 12. Die drei übrigen der sechs Kanäle 12, 14 sind Entsorgungskanäle 14. Einer der drei Versorgungskanäle 12 ist zum Zuleiten des Brennmittels zu den Brennstoffzellen 4 vorgesehen, während ein anderer der drei Versorgungskanäle 12 zum Zuleiten des Oxidationsmittels zu den Brennstoffzellen 4 vorgesehen ist. Ein weiterer der drei Versorgungskanäle 12 ist zum Zuleiten des Kühlmittels zu den Brennstoffzellen 4 vorgesehen. Entsprechend ist einer der drei Entsorgungskanäle 14 zum Ableiten des Brennmittels aus den Brennstoffzellen 4 vorgesehen, während ein anderer der drei Entsorgungskanäle 14 zum Ableiten des Oxidationsmittels aus den Brennstoffzellen 4 vorgesehen ist. Ein weiterer der drei Entsorgungskanäle 14 ist zum Ableiten des Kühlmittels aus den Brennstoffzellen 4 vorgesehen.

Die Kanäle 12, 14 sind senkrecht zur Zeichenebene ausgerichtet. Folglich sind die Kanäle 12, 14 entlang derjenigen Richtung ausgerichtet, entlang welcher die Brennstoffzellen 4 gestapelt sind ("Stapelrichtung").

Im dargestellten Schnitt ist jeder der sechs Kanäle 12, 14 von einer weiteren Primärdichtung 8 begrenzt, mittels welcher der jeweilige Kanal 12, 14 gegenüber seiner Umgebung abdichtet ist. Jede dieser weiteren Primärdichtungen 8 ist von derselben Sekundärdichtung 10 umgeben, welche auch die Primärdichtung 8 umgibt, durch die der Brennmittelraum 6 begrenzt und abdichtet ist.

Zwischen der Primärdichtung 8, mittels welcher der Brennmittelraum 6 abgedichtet ist, den Primärdichtungen 8, mittels welcher sowie die Kanäle 12, 14 abgedichtet sind, und der Sekundärdichtung 10 ist ein Überwachungsraum 16 ausgebildet. Dieser Überwachungsraum 16 ist durch die Primärdichtungen 8 und die Sekundärdichtung 10 begrenzt und mittels der Sekundärdichtung 10 gegenüber seiner Umgebung abgedichtet.

Sowohl die Primärdichtungen 8 als auch die Sekundärdichtung 10 sind jeweils als rechteckige Dichtrahmen mit einer Dicke von einigen hundert Mikrometern bis zu einigen Millimetern ausgestaltet. Ferner ist die Sekundärdichtung 10 mit einem Abstand von einigen Millimetern zu den Primärdichtungen 8 angeordnet.

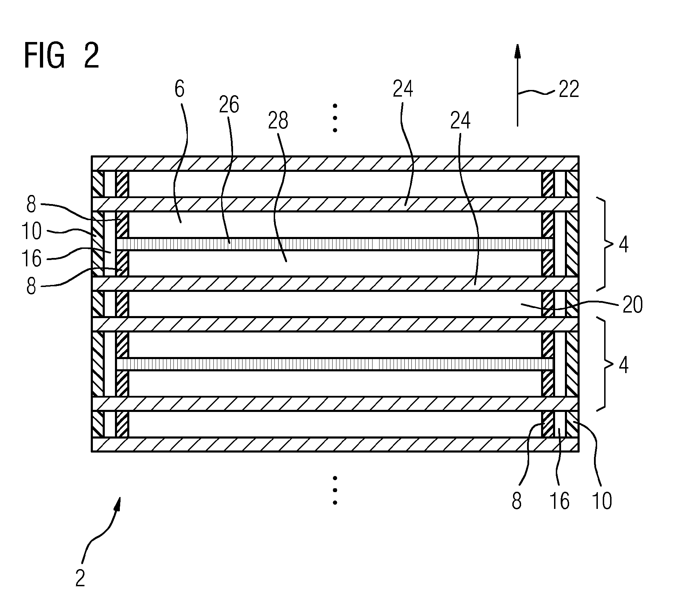

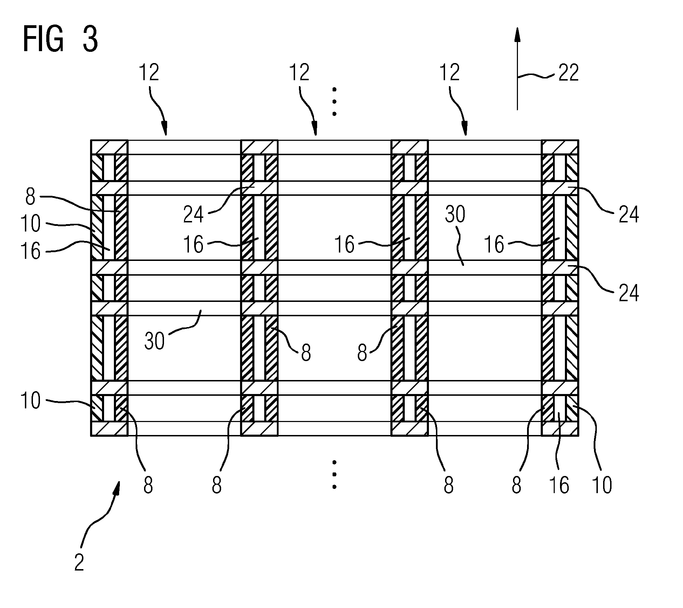

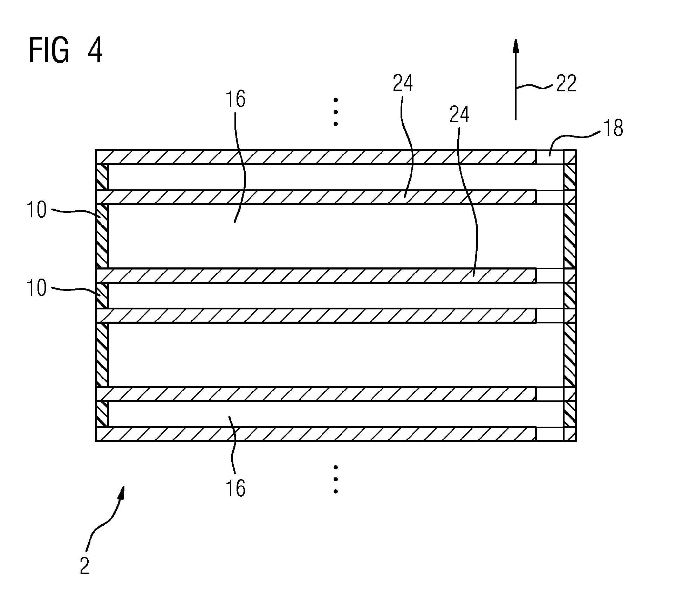

Weiterhin sind in FIG 1 drei senkrecht zur Zeichenebene ausgerichtete Schnittebenen II, III, IV dargestellt, auf die sich die Figuren 2 bis 4 beziehen. So bezieht sich FIG 2 auf einen Schnitt durch die Brennstoffzelleneinheit 2 entlang der Schnittebene II, während sich FIG 3 auf einen Schnitt durch die Brennstoffzelleneinheit 2 entlang der Schnittebene III bezieht. Weiterhin bezieht sich FIG 4 auf einen Schnitt durch die Brennstoffzelleneinheit 2 entlang der Schnittebene IV.

In FIG 1 sind außerdem zwei diagonal gegenüberliegend angeordnete Verbindungsöffnungen 18 angedeutet, die in Kollektorplatten der Brennstoffzelleneinheit 2 angeordnet sind, wobei in FIG 1 die Kollektorplatten selbst nicht dargestellt sind. Eine Darstellung der Kollektorplatten, wenn auch aus einer anderen Perspektive, findet sich z.B. in den Figuren 2 bis 4. Mittels dieser beiden Verbindungsöffnungen 18 ist der Überwachungsraum 16 der dargestellten Brennstoffzelle 4 mit Überwachungsräumen 16 der anderen Brennstoffzellen 4 der Brennstoffzelleneinheit 2 und sowie mit zwischen den Brennstoffzellen 4 angeordneten Überwachungsräumen 16 verbunden.

FIG 2 zeigt einen Schnitt durch die Brennstoffzelleneinheit 2 aus FIG 1 entlang der Schnittebene II. Exemplarisch sind zwei der Brennstoffzellen 4 der Brennstoffzelleneinheit 2 dargestellt. Ferner sind ein zwischen den beiden Brennstoffzellen 4 angeordneter Kühlmittelraum 20, ein über der oberen der beiden Brennstoffzellen 4 angeordneter Kühlmittelraum 20 sowie ein unter der unteren der beiden Brennstoffzellen 4 angeordneter Kühlmittelraum 20 abgebildet.

In Stapelrichtung 22 bzw. in entgegengesetzter Richtung weist die Brennstoffzelleneinheit 2 weitere in FIG 2 nicht dargestellte Brennstoffzellen sowie zwischen diesen Brennstoffzellen angeordnete weitere Kühlmittelräume auf.

Jede der Brennstoffzellen 4 der Brennstoffzelleneinheit 2 umfasst zwei Kollektorplatten 24, welche die jeweilige Brennstoffzelle 4 begrenzen und als mechanische Träger von Bauteilen der Brennstoffzelle 4 vorgesehen sind. Die Kollektorplatten 24 weisen Prägungen auf, die rahmenförmige Rillen ausbilden. Der Übersichtlichkeit halber sind die Prägungen der Kollektorplatten 24 nicht dargestellt. Außerdem weist jede der Brennstoffzellen 4 eine zwischen ihren Kollektorplatten 24 angeordnete Membran-Elektroden-Einheit 26 auf, durch die der Oxidationsmittelraum 28 und der Brennmittelraum 6 der jeweiligen Brennstoffzelle 4 voneinander getrennt sind.

Jeder der Brennmittelräume 6, jeder der Oxidationsmittelräume 28 und jeder der Kühlmittelräume 20 der Brennstoffzelleneinheit 2 ist mittels einer Primärdichtung 8 gegenüber seiner Umgebung abgedichtet. Jede dieser Primärdichtungen 8 ist von einer Sekundärdichtung 10 umgeben, sodass zwischen den Primärdichtungen 8 und den Sekundärdichtungen 10 Überwachungsräume 16 ausgebildet sind. Ferner sind die Sekundärdichtungen 10 der Brennstoffzelleneinheit 2 jeweils zwischen zwei benachbarten Kollektorplatten 24 angeordnet. Die Überwachungsräume 16 sind durch die Primärdichtungen 8 und die Sekundärdichtungen 10 begrenzt und mittels der Sekundärdichtungen 10 gegenüber ihrer Umgebung abgedichtet. Weiterhin sind die Überwachungsräume 16 jeweils durch zwei benachbarte Kollektorplatten 24 begrenzt.

Die Primärdichtungen 8, mittels welcher die Kühlmittelräume 20 der Brennstoffzelleneinheit 2 abgedichtet sind, sind jeweils zwischen benachbarten Kollektorplatten 24 benachbarter Brennstoffzellen 4 angeordnet. Dagegen sind die Primärdichtungen 8, mittels derer die Brennmittelräume 6 bzw. die Oxidationsmittelräume 28 abgedichtet sind, jeweils zwischen einer Kollektorplatte 24 und einer Membran-Elektroden-Einheit 26 angeordnet.

Benachbarte Kollektorplatten 24 zweier benachbarter Brennstoffzellen 4 sind an ihren Prägungen miteinander verschweißt. Zwischen den miteinander verschweißten Kollektorplatten 24 sind die Primärdichtungen 8 und die Sekundärdichtung 10 jeweils durch eine rahmenförmige Schweißnaht ausgebildet, die solche benachbarte, miteinander verschweißte Kollektorplatten 24 verbindet. Die übrigen Primärdichtungen 8 und Sekundärdichtungen 10 bestehen aus einem spritzgegossenen Elastomer, welcher unmittelbar auf die Kollektorplatten 24 aufgespritzt ist. Der Einfachheit halber sind alle Primärdichtungen 8 gleichartig dargestellt, unabhängig davon ob, sie aus einem Elastomer bestehen oder durch eine Schweißnaht ausgebildet sind. Entsprechendes gilt für die Sekundärdichtungen 10.

FIG 3 zeigt einen Schnitt durch die Brennstoffzelleneinheit 2 aus FIG 1 entlang der Schnittebene III. Der dargestellte Schnitt verläuft durch die drei Versorgungskanäle 12 und umfasst bezüglich der Stapelrichtung 22 der Brennstoffzellen 4 den gleichen Abschnitt der Brennstoffzelleneinheit 2 wie der in FIG 2 dargestellte Schnitt.

Aus FIG 3 ist ersichtlich, dass die Versorgungskanäle 12 dadurch ausgebildet sind, dass die Kollektorplatten 24 der Brennstoffzelleneinheit 2 für jeden der drei Versorgungskanäle 12 jeweils eine Kanalöffnung 30 aufweisen, die deckungsgleich über/unter einer der Kanalöffnungen 30 benachbarter Kollektorplatten 24 angeordnet ist.

Ferner befinden sich jeweils zwischen zwei benachbarten Kollektorplatten 24 drei Primärdichtungen 8 sowie eine Sekundärdichtung 10, welche die drei Primärdichtungen 8 umgibt. Zwischen den drei Primärdichtungen 8 und der Sekundärdichtung 10 ist ein Überwachungsraum 16 ausgebildet, der mittels der Sekundärdichtung 10 gegenüber seiner Umgebung abgedichtet ist und durch die drei Primärdichtungen 8 sowie die Sekundärdichtung 10 begrenzt ist.

Die Versorgungskanäle 12 verlaufen in Stapelrichtung 22 der Brennstoffzellen 4 und sind durch die zwischen den Kollektorplatten 24 angeordneten Primärdichtungen 8 senkrecht zur Stapelrichtung 22 begrenzt und abgedichtet.

Die in FIG 3 nicht dargestellten Entsorgungskanäle 14 (siehe FIG 1) sind vollkommen analog zu den Versorgungskanälen 12 ausgebildet. Ein Schnitt durch die Entsorgungskanäle 14 entlang einer parallel zur Schnittebene III ausgerichteten Schnittebene, würde prinzipiell genauso aussehen wie der in FIG 3 dargestellte Schnitt.

FIG 4 zeigt einen Schnitt durch die Brennstoffzelleneinheit 2 aus FIG 1 entlang der Schnittebene IV, wobei der Schnitt bezüglich der Stapelrichtung 22 der Brennstoffzellen 4 den gleichen Abschnitt der Brennstoffzelleneinheit 2 wie der in FIG 2 dargestellte Schnitt umfasst.

Im dargestellten Schnitt weist jede der Kollektorplatten 24 eine Verbindungsöffnung 18 auf, wobei diese Verbindungsöffnungen 18 der Kollektorplatten 24 deckungsgleich übereinander angeordnet sind. Ferner weist jede der Kollektorplatten 24 eine weitere, in FIG 4 nicht dargestellte Verbindungsöffnung 18 auf, die diagonal gegenüberliegend zu ihrer in FIG 4 dargestellten Verbindungsöffnung 18 angeordnet ist (vgl. FIG 1 und die zugehörige Beschreibung).

Sämtliche Überwachungsräume 16 der Brennstoffzelleneinheit 2 sind durch die Verbindungsöffnungen 18 miteinander verbunden, wodurch ein Stoffaustausch zwischen den einzelnen Überwachungsräumen 16 ermöglicht wird.

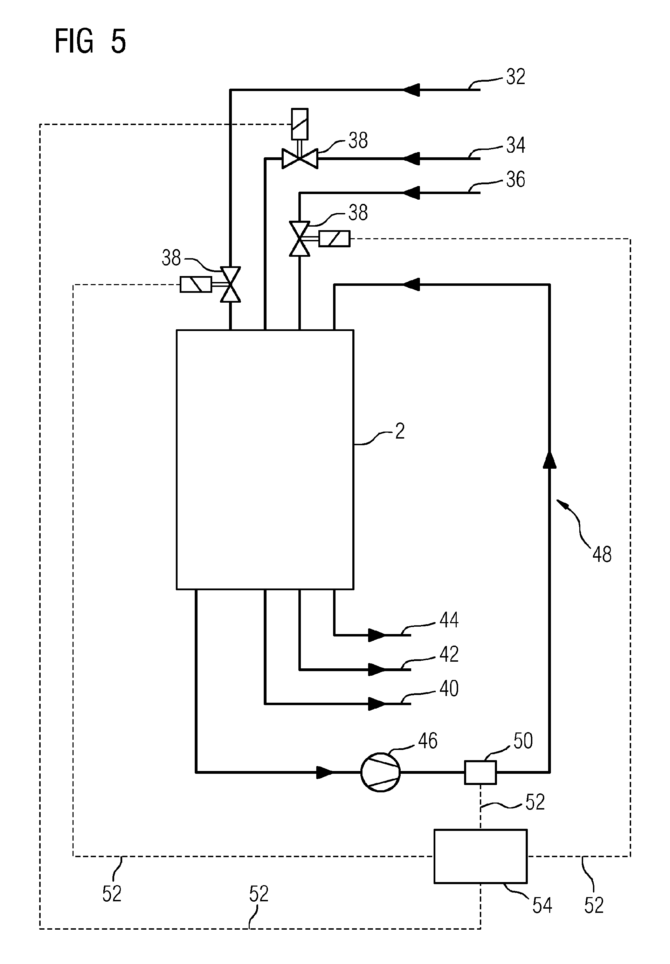

FIG 5 zeigt einen Schaltplan zur Leckageüberwachung der Brennstoffzelleneinheit 2.

An der Brennstoffzelleneinheit 2 sind drei Versorgungsleitungen 32, 34, 36 sowie drei Entsorgungsleitungen 40, 42, 44 angeschlossen. Jede dieser drei Versorgungsleitungen 32, 34, 36 ist mit jeweils einem der drei Versorgungskanäle 12 aus FIG 1 verbunden, während jede dieser drei Entsorgungsleitungen 40, 42, 44 mit jeweils einem der drei Entsorgungskanäle 14 aus FIG 1 verbunden ist. Die Ver-/Entsorgungskanäle 12, 14 selbst sind in FIG 5 nicht dargestellt.

Eine der drei Versorgungsleitungen 32, 34, 36 ist eine Brennmittel-Versorgungsleitung 32 zur Versorgung der Brennstoffzelleneinheit 2 mit dem Brennmittel. Weiterhin ist eine andere der drei Versorgungsleitungen 32, 34, 36 eine Kühlmittel-Versorgungsleitung 34 zur Versorgung der Brennstoffzelleneinheit 2 mit dem Kühlmittel. Eine weitere der drei Versorgungsleitungen 32, 34, 36 ist eine Oxidationsmittel-Versorgungsleitung 36 zur Versorgung der Brennstoffzelleneinheit mit dem Oxidationsmittel.

Sowohl die Brennmittel-Versorgungsleitung 32 als auch die Kühlmittel-Versorgungsleitung 34 und die Oxidationsmittel-Versorgungsleitung 36 weisen jeweils ein elektrisch steuerbares Ventil 38 auf.

Eine der drei Entsorgungsleitungen 40, 42, 44 ist eine Brennmittel-Entsorgungsleitung 40 zur Entsorgung des Brennmittels aus der Brennstoffzelleneinheit 2. Ferner ist eine andere der drei Entsorgungsleitungen 40, 42, 44 eine Kühlmittel-Entsorgungsleitung 42 zur Entsorgung des Kühlmittels aus der Brennstoffzelleneinheit 2. Eine weitere der drei Entsorgungsleitungen 40, 42, 44 ist eine Oxidationsmittel-Entsorgungsleitung 44 zur Entsorgung des Oxidationsmittels aus der Brennstoffzelleneinheit 2.

Des Weiteren ist eine Pumpe 46 über ein Leitungssystem 48 mit der Brennstoffzelleneinheit 2 verbunden. Eingangsseitig ist die Pumpe 46 an einer ersten Verbindungsöffnung der Brennstoffzelleneinheit 2 angeschlossen, insbesondere an der untersten Brennstoffzelle der Brennstoffzelleneinheit 2. Ausgangsseitig ist die Pumpe 46 an einer zweiten, der ersten Verbindungsöffnung räumlich diagonal gegenüberliegend angeordneten Verbindungsöffnung der Brennstoffzelleneinheit 2 angeschlossen, insbesondere an der obersten Brennstoffzelle der Brennstoffzelleneinheit 2. Die Verbindungsöffnungen (siehe FIG 1 oder FIG 4) selbst sind in FIG 5 nicht dargestellt.

Mit Hilfe der Pumpe 46 wird eine Atmosphäre der miteinander verbundenen Überwachungsräume der Brennstoffzelleneinheit 2 in einem geschlossenen Kreislauf umgewälzt.

Strömungsrichtungen des Brenn-/Kühl-/Oxidationsmittels in den Ver-/Entsorgungsleitungen 32, 34, 36, 40, 42, 44 bzw. im Leitungssystem 48 sind in FIG 5 durch Pfeile angedeutet.

Weiterhin ist ein Gassensor 50 über das Leitungssystem 48 mit der Pumpe 46 verbunden. Der Gassensor 50 ist zum Messen der in den Überwachungsräumen vorliegenden Brennmittelkonzentration vorbereitet. Im vorliegenden Ausführungsbeispiel ist der Gassensor 50 hinter der Pumpe 46 angeordnet, bezogen auf die Strömungsrichtung im Leitungssystem 48. Grundsätzlich kann der Gassensor 50 auch vor der Pumpe 46 angeordnet sein.

Der Gassensor 50 ist über eine Datenleitung 52 mit einem Auswertegerät 54 verbunden. Das Auswertegerät 54 wiederum ist über weitere Datenleitungen 52 mit dem elektrisch steuerbaren Ventil 38 der Brennmittel-Versorgungsleitung 32, dem elektrisch steuerbaren Ventil 38 der Kühlmittel-Versorgungsleitung 34 sowie dem elektrisch steuerbaren Ventil 38 der Oxidationsmittel-Versorgungsleitung 36 verbunden. Ferner ist das Auswertegerät 54 zum Steuern dieser drei Ventile 38 vorbereitet.

Mittels des Gassensors 50 wird eine in den Überwachungsräumen vorliegende Brennmittelkonzentration gemessen und an das Auswertegerät 54 übertragen. Die Brennmittelkonzentration wird vom Auswertegerät 54 mit einem Schwellwert verglichen, der im Auswertegerät 54 hinterlegt ist. Der Schwellwert beträgt beispielsweise 20% derjenigen Brennmittelkonzentration, ab der ein explosives Mischungsverhältnis eines Brennmittel-Umgebungsluft-Gemisches vorliegt (20% der unteren Explosionsgrenze des Brennmittel-Umgebungsluft-Gemisches).

Weist ein vom Brennmittel durchströmbarer Raum der Brennstoffzelleneinheit 2 eine Leckage auf, so nimmt die Brennmittel-Konzentration in den Überwachungsräumen zu. Sobald die gemessene Brennmittel-Konzentration den Schwellwert überschreitet, werden das elektrisch steuerbare Ventil 38 der Brennmittel-Versorgungsleitung 32, das elektrisch steuerbare Ventil 38 der Kühlmittel-Versorgungsleitung 34 sowie das elektrisch steuerbare Ventil 38 Oxidationsmittel-Versorgungsleitung 36 derart vom Auswertegerät 54 angesteuert, dass die drei Ventile 38 geschlossen werden.

Außerdem kann ein zusätzlicher, in FIG 5 nicht dargestellter Gassensor, der zum Messen der in den Überwachungsräumen vorliegenden Oxidationsmittelkonzentration vorbereitet ist, über das Leitungssystem 48 mit der Pumpe 46 verbunden sein. Dieser zusätzliche Gassensor kann wiederum über eine zusätzliche Datenleitung mit dem Auswertegerät 54 verbunden sein. Mittels des zusätzlichen Gassensors kann die in den Überwachungsräumen vorliegende Oxidationsmittelkonzentration gemessen und an das Auswertegerät 54 übertragen werden. Überschreitet die Oxidationsmittelkonzentration in den Überwachungsräumen einen vorgebenden, im Auswertegerät 54 hinterlegten Schwellwert, kann das Auswertegerät 54 besagte Ventile 38 derart ansteuern, dass die Ventile 38 geschlossen werden.

Ferner kann ein weiterer, in FIG 5 nicht dargestellter Sensor zum Einsatz kommen, der zum Messen der in den Überwachungsräumen vorliegenden Kühlmittelkonzentration vorbereitet ist. Mit Hilfe dieses weiteren Sensors können die Überwachungsräume in analoger Weise auf eine Leckage eines vom Kühlmittel durchströmbaren Raums hin überwacht werden.

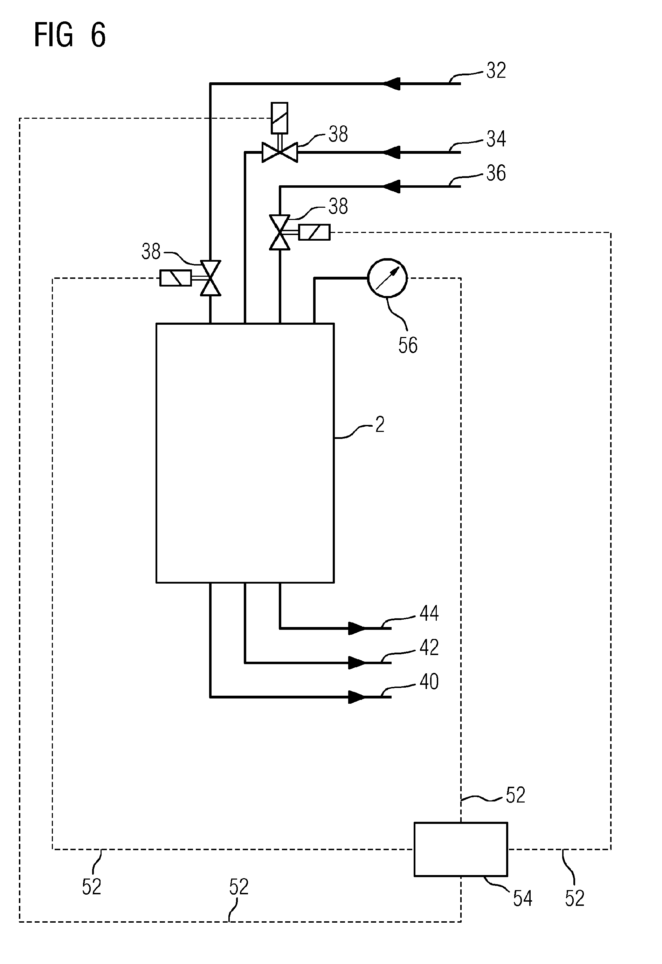

Die nachfolgende, im Zusammenhang mit den Figuren 6 bis 8 diskutierte Beschreibung beschränkt sich im Wesentlichen auf die Unterschiede zum Ausführungsbeispiel in FIG 5, auf das bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind in den folgenden Ausführungsbeispielen übernommen, ohne dass sie erneut beschrieben sind.

FIG 6 zeigt einen alternativen Schaltplan zur Leckageüberwachung der Brennstoffzelleneinheit 2. Beim Ausführungsbeispiel in FIG 6 ist keine Pumpe zum Umwälzen der Atmosphäre der Überwachungsräume vorgesehen. Ferner wird anstelle eines Gassensors ein Druckmessgerät 56 zur Überwachung der Überwachungsräume eingesetzt.

Im vorliegenden Ausführungsbeispiel ist das Druckmessgerät 56 an derjenigen Verbindungsöffnung angeschlossen, an der die Pumpe 46 aus FIG 5 ausgangsseitig angeschlossen ist. Alternativ kann das Druckmessgerät 56 an derjenigen Verbindungsöffnung angeschlossen sein, an der die Pumpe 46 aus FIG 5 eingangsseitig angeschlossen ist. Sinnvollerweise ist in beiden Fällen die jeweils andere Verbindungsöffnung verschlossen.

Mittels des Druckmessgeräts 56 wird ein in den Überwachungsräumen herrschender Druck gemessen und über eine Datenleitung 52 an das Auswertegerät 54 übertragen. Vom Auswertegerät 54 wird der Druck mit einem Schwellwert verglichen, der im Auswertegerät 54 hinterlegt ist. Der Schwellwert ist in diesem Fall ein vorgegebener Höchstdruck.

Weist ein vom Brenn-/Oxidationsmittel durchströmbarer Raum der Brennstoffzelleneinheit 2 eine Leckage auf, nimmt der in den Überwachungsräumen herrschende Druck zu. Falls das eingesetzte Kühlmittel gasförmig ist, führt auch eine Leckage eines vom Kühlmittel durchströmbaren Raums zu einem Anstieg des Drucks in den Überwachungsräumen.

Sobald der gemessene Druck den Schwellwert überschreitet, werden das elektrisch steuerbare Ventil 38 der Brennmittel-Versorgungsleitung 32, das elektrisch steuerbare Ventil 38 der Kühlmittel-Versorgungsleitung 34 und das elektrisch gesteuerte Ventil 38 der Oxidationsmittel-Versorgungsleitung 36 derart vom Auswertegerät 54 angesteuert, dass die drei Ventile 38 geschlossen werden.

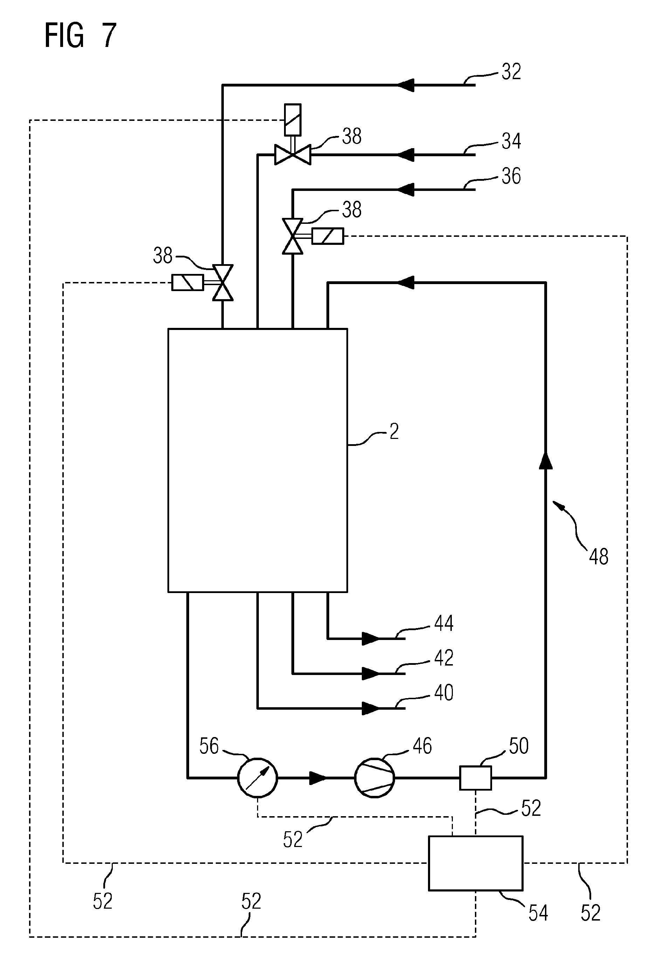

FIG 7 zeigt einen weiteren Schaltplan zur Leckageüberwachung der Brennstoffzelleneinheit 2. Beim vorliegenden Ausführungsbeispiel wird zusätzlich zum Gassensor 50, der zum Messen der in den Überwachungsräumen vorliegenden Brennmittelkonzentration vorbereitet ist, ein Druckmessgerät 56 zur Überwachung der Überwachungsräume eingesetzt.

Das Druckmessgerät 56 ist über das Leitungssystem 48 mit der Pumpe 46 verbunden, wobei das Druckmessgerät 56 vor der Pumpe 46 angeordnet ist, bezogen auf die Strömungsrichtung im Leitungssystem 48. Grundsätzlich kann das Druckmessgerät 56 auch hinter dem Gassensor 50 angeordnet sein. Mittels des Druckmessgeräts 56 wird ein in den Überwachungsräumen herrschender Druck gemessen und über eine Datenleitung 52 an das Auswertegerät 54 übertragen.

Des Weiteren ist im Auswertegerät 54 nicht nur ein Schwellwert für die Brennmittelkonzentration, sondern auch ein Schwellwert für den Druck hinterlegt. Der Schwellwert für den Druck ist ein vorgegebener Höchstdruck.

Das Auswertegerät 54 vergleicht den vom Druckmessgerät 56 übermittelten Druck sowie die vom Gassensor 50 übermittelte Brennmittelkonzentration mit dem jeweils zugehörigen Schwellwert.

Weist ein vom Brenn-/Oxidationsmittel durchströmbarer Raum der Brennstoffzelleneinheit 2 eine Leckage auf, nimmt der in den Überwachungsräumen herrschende Druck zu. Falls das eingesetzte Kühlmittel gasförmig ist und ein vom Kühlmittelmittel durchströmbarer Raum der Brennstoffzelleneinheit 2 eine Leckage aufweist, nimmt der in den Überwachungsräumen herrschende Druck ebenfalls zu. Mittels des Druckmessgeräts 56 kann also nicht nur eine Leckage eines vom Brennmittel durchströmbaren Raums festgestellt werden, sondern auch eine Leckage eines vom Oxidationsmittel und/oder eines vom Kühlmittel durchströmbaren Raums festgestellt werden.

Sobald der vom Druckmessgerät 56 gemessene Druck den Schwellwert überschreitet, werden das elektrisch steuerbare Ventil 38 der Brennmittel-Versorgungsleitung 32, das elektrisch steuerbare Ventil 38 der Kühlmittel-Versorgungsleitung 34 sowie das elektrisch steuerbare Ventil 38 der Oxidationsmittel-Versorgungsleitung 36 derart vom Auswertegerät 54 angesteuert, dass die drei Ventile 38 geschlossen werden.

Ferner wertet das Auswertegerät 54 einen zeitlichen Verlauf der gemessenen Brennmittelkonzentration bis zum Zeitpunkt des Schließens der Ventile 38 aus. Insbesondere prüft das Auswertegerät 54 den zeitlichen Verlauf auf eine Zunahme der Brennmittelkonzentration unmittelbar vor dem Schließen der Ventile 38. Durch die Auswertung lässt sich eingrenzen, ob eine Ursache für das Schließen der Ventile 38 eine Leckage eines vom Brennmittel durchströmten Raums oder eine Leckage eines vom Kühl-/Oxidationsmittel durchströmten Raums ist. Dadurch kann ein Aufwand zur Behebung der Leckage deutlich reduziert werden. Das Auswertegerät 54 kann darüber hinaus ein Anzeigeelement, wie z.B. eine Kontrollleuchte, aufweisen, welche darüber informiert, ob die Ursache für das Schließen der Ventile 38 eine Leckage eines vom Brennmittel durchströmten Raums ist.

Fällt das Druckmessgerät 56 aufgrund eines Defekts aus, können die Überwachungsräume mit dem Gassensor 50 weiter auf eine Leckage eines vom Brennmittel durchströmbaren Raums überwacht werden. Des Weiteren können die Überwachungsräume mit dem Druckmessgerät 56 auf die zuvor beschriebene Weise weiter auf eine Leckage überwacht werden, falls der Gassensor 50 aufgrund eines Defekts ausfällt.

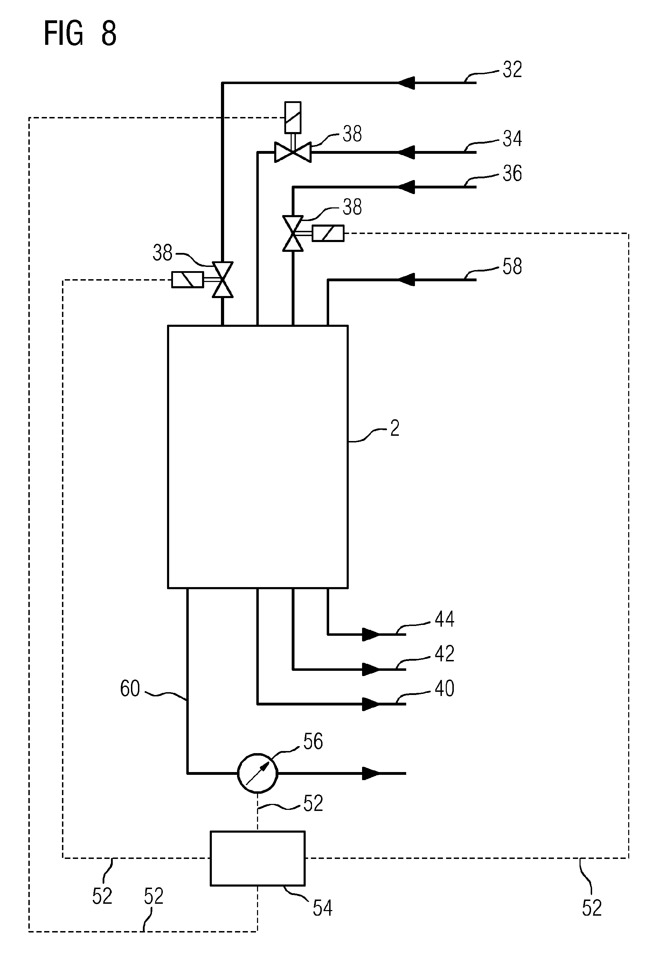

FIG 8 zeigt noch einen Schaltplan zur Leckageüberwachung der Brennstoffzelleneinheit 2. Beim Ausführungsbeispiel in FIG 8 ist keine Pumpe zum Umwälzen der Atmosphäre der Überwachungsräume vorgesehen. Stattdessen ist im vorliegenden Ausführungsbeispiel an derjenigen Verbindungsöffnung, an der die Pumpe 46 aus FIG 5 ausgangsseitig angeschlossen ist, eine Spülgaszufuhrleitung 58 angeschlossen. An derjenigen Verbindungsöffnung, an der die Pumpe 46 aus FIG 5 eingangsseitig angeschlossen ist, eine Spülgasabfuhrleitung 60 angeschlossen. Ferner wird anstelle eines Gassensors ein Druckmessgerät 56 zur Überwachung der Überwachungsräume eingesetzt.

Über die Spülgaszufuhrleitung 58 ist ein Spülgas in die miteinander verbundenen Überwachungsräume der Brennstoffzelleneinheit 2 einleitbar, während über die Spülgasabfuhrleitung 60 das Spülgas aus den Überwachungsräumen absaugbar ist. Das Druckmessgerät 56 ist an der Spülgasabfuhrleitung 60 angeschlossen. Zum Absaugen des Spülgases ist an der Spülgasabfuhrleitung 60 eine Absaugvorrichtung angeschlossen (nicht dargestellt). Die Absaugvorrichtung ist hinter dem Druckmessgerät 56 angeordnet, bezogen auf eine Strömungsrichtung in der Spülgasabfuhrleitung 60.

In einem Betriebszustand der Brennstoffzelleneinheit 2 wird das Spülgas, das gegenüber dem Brennmittel inert ist, über die Spülgaszufuhrleitung 58 in die Überwachungsräume eingeleitet. Dabei werden die Überwachungsräume mit einem Druck (Spülgasdruck) beaufschlagt, der größer ist als ein Druck in den vom Brenn-/Oxidationsmittel durchströmbaren Räumen, um bei Vorliegen einer Leckage einem Austritt des Brenn-/Oxidationsmittels aus den vom Brenn-/Oxidationsmittel durchströmbaren Räumen entgegenzuwirken. Mittels der Absaugvorrichtung wird das Spülgas über die Spülgasabfuhrleitung 60 aus den Überwachungsräumen abgesaugt.

Der im Auswertegerät hinterlegte Schwellwert ist in diesem Ausführungsbeispiel ein vorgegebener Mindestdruck. Weist ein vom Brenn-/Oxidationsmittel durchströmbarer Raum der Brennstoffzelleneinheit 2 eine Leckage auf, so strömt das Spülgas aus den Überwachungsräumen in diesen Raum ein und der Spülgasdruck nimmt ab. Sobald der vom Druckmessgerät 56 gemessene Spülgasdruck den im Auswertegerät 54 hinterlegten Mindestdruck unterschreitet, werden das elektrisch steuerbare Ventil 38 der Brennmittel-Versorgungsleitung 32, das elektrisch steuerbare Ventil 38 der Kühlmittel-Versorgungsleitung und das elektrisch steuerbare Ventil 38 der Oxidationsmittel-Versorgungsleitung 36 derart vom Auswertegerät 54 angesteuert, dass die drei Ventile 38 geschlossen werden.

Bei den Ausführungsbeispielen in den Figuren 5 bis 8 kann eine Überwachung der Überwachungsräume sowohl in einem stillgesetzten Zustand als auch in einem Betriebszustand der Brennstoffzelleneinheit 2 erfolgen.

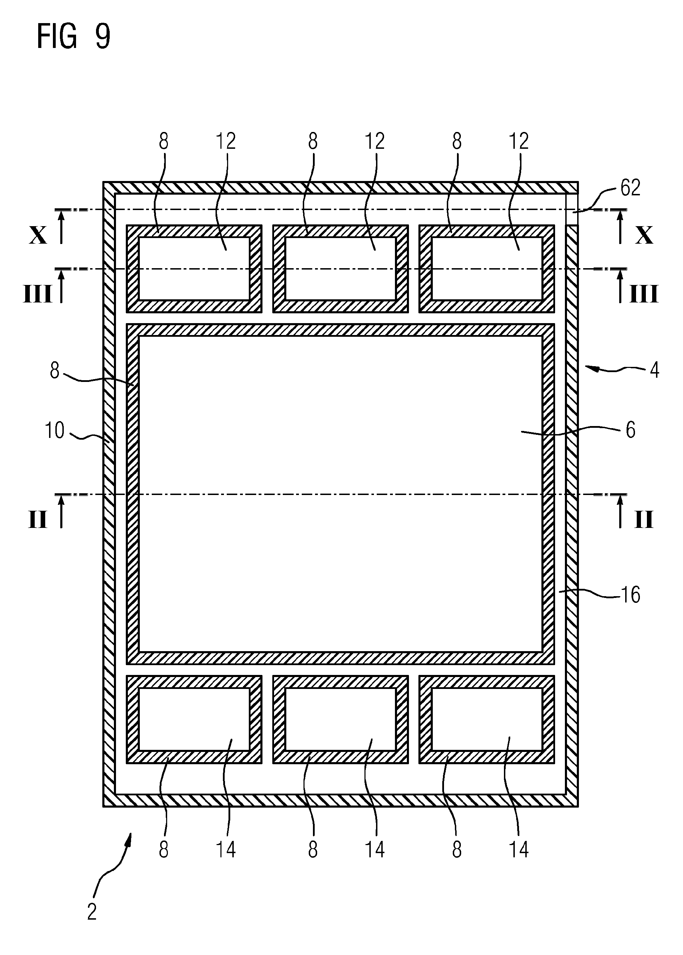

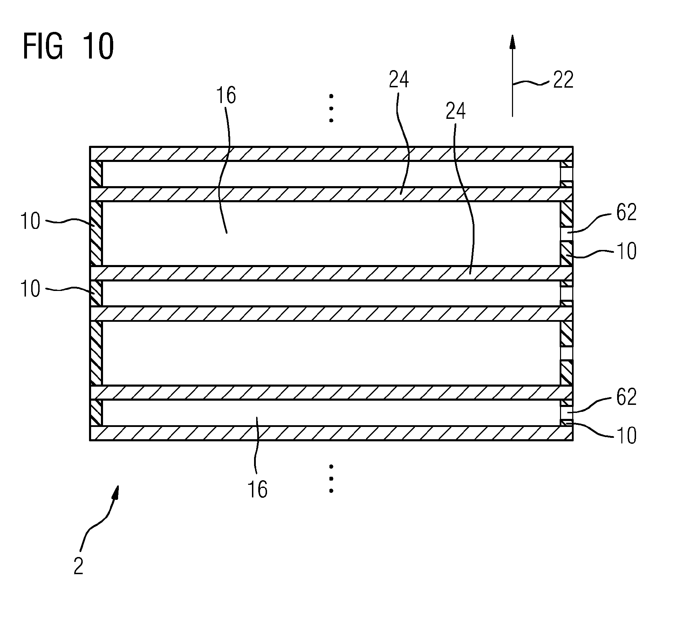

Die nachfolgende, im Zusammenhang mit FIG 9 und FIG 10 diskutierte Beschreibung beschränkt sich im Wesentlichen auf die Unterschiede zum Ausführungsbeispiel in den Figuren 1 bis 4, auf das bezüglich gleich bleibender Merkmale und Funktionen verwiesen wird. Nicht erwähnte Merkmale sind im folgenden Ausführungsbeispiel übernommen, ohne dass sie erneut beschrieben sind.

FIG 9 zeigt einen Schnitt durch eine weitere Brennstoffzelleneinheit 2. Diese weitere Brennstoffzelleneinheit 2 unterscheidet sich von der Brennstoffzelleneinheit 2 aus FIG 1 dadurch, dass die abgebildete Brennstoffzelle 4 der weiteren Brennstoffzelleneinheit 2 anstelle von in den Kollektorplatten angeordneten Verbindungsöffnungen eine Prüföffnung 62 aufweist. Diese Prüföffnung 62 ist in der Sekundärdichtung 10 angeordnet. Ferner ist der Überwachungsraum 16 durch die Prüföffnung 62 mit seiner Umgebung, d.h. mit der Umgebung der weiteren Brennstoffzelleneinheit 2, verbunden.

In FIG 9 sind drei senkrecht zur Zeichenebene ausgerichtete Schnittebenen II, III, X dargestellt. Ein Schnitt durch die weitere Brennstoffzelleneinheit 2 entlang der Schnittebene II entspricht dem in FIG 2 dargestellten Schnitt, während ein Schnitt entlang der Schnittebene III dem in FIG 3 dargestellten Schnitt entspricht.

FIG 10 zeigt einen Schnitt durch die weitere Brennstoffzelleneinheit 2 aus FIG 9 entlang der Schnittebene X.

Aus FIG 10 ist ersichtlich, dass in jeder der Sekundärdichtungen 10 eine Prüföffnung 62 angeordnet ist, wobei diese Prüföffnungen 62 übereinander angeordnet sind. Da Verbindungsöffnungen in den Kollektorplatten 24 fehlen, sind die einzelnen zwischen Kollektorplatten 24 angeordneten Überwachungsräume 16 nicht miteinander verbunden, sondern durch die Kollektorplatten 24 voneinander getrennt.

Mittels der in FIG 10 dargestellten Anordnung der Prüföffnungen 62 wird eine individuelle Überwachung der einzelnen Überwachungsräume 16 ermöglicht, was wiederum eine einfache Lokalisierung einer Leckage ermöglicht.

Eine individuelle Überwachung der Überwachungsräume 16 kann z.B. dadurch erfolgen, dass ein geeignetes Messgerät, insbesondere ein Gassensor, an eine der Prüföffnungen gehalten wird, um festzustellen, ob in den zugehörigen Überwachungsraum 16 ein Teil des Brenn-/Kühl-/Oxidationsmittels eintritt. Auf diese Weise ist feststellbar, ob an einer der Primärdichtungen, die an diesen Überwachungsraum 16 grenzen, eine Leckage vorhanden ist.

Die in FIG 9 und FIG 10 dargestellte, weitere Brennstoffzelleneinheit 2 kann zudem in einem Gehäuse (nicht dargestellt) angeordnet sein, welches mittels eines weiteren Messgeräts auf eine Leckage in der Brennstoffzelleneinheit 2 hin überwacht werden kann. Wird mittels des weiteren Messgeräts eine Leckage festgestellt, so kann die zuvor beschriebene individuelle Überwachung der Überwachungsräume 16 erfolgen. Dabei wird das Messgerät sinnvollerweise nacheinander an die einzelnen Prüföffnungen 62 gehalten, bis derjenige Überwachungsraum 16 identifiziert ist, in den ein Teil des Brenn-/ Kühl-/Oxidationsmittels eintritt.

Alternativ kann an jeder der Prüföffnungen 62 jeweils ein Messgerät stationär angeschlossen sein, wodurch eine gleichzeitige automatische Überwachung aller Überwachungsräume 16 ermöglicht wird.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

## Patentansprüche

1. Brennstoffzelleneinheit (2) mit zumindest einem von einem Fluid durchströmbaren Raum (6, 12, 14, 20, 28), welcher mittels einer Primärdichtung (8) gegenüber seiner Umgebung abgedichtet ist,
**dadurch gekennzeichnet, dass** die Primärdichtung (8) von einer Sekundärdichtung (10) umgeben ist, sodass zwischen der Primärdichtung (8) und der Sekundärdichtung (10) ein Überwachungsraum (16) ausgebildet ist, welcher durch die Primärdichtung (8) und die Sekundärdichtung (10) begrenzt ist und mittels der Sekundärdichtung (10) gegenüber seiner Umgebung abgedichtet ist.

2. Brennstoffzelleneinheit (2) nach Anspruch 1,
**dadurch gekennzeichnet, dass** der zumindest eine vom Fluid durchströmbare Raum (6, 12, 14, 20, 28) ein Brennmittelraum (6) ist, der von einem Brennmittel durchströmbar ist.

3. Brennstoffzelleneinheit (2) nach Anspruch 1 oder 2,
**dadurch gekennzeichnet, dass** der zumindest eine vom Fluid durchströmbare Raum (6, 12, 14, 20, 28) ein Oxidationsmittelraum (28) ist, der von einem Oxidationsmittel durchströmbar ist.

4. Brennstoffzelleneinheit (2) nach einem der vorhergehenden Ansprüche,
**dadurch gekennzeichnet, dass** der zumindest eine vom Fluid durchströmbare Raum (6, 12, 14, 20, 28) ein Kühlmittelraum (20) ist, der von einem Kühlmittel durchströmbar ist.

5. Brennstoffzelleneinheit (2) nach einem der vorhergehenden Ansprüche,
**dadurch gekennzeichnet, dass** der zumindest eine vom Fluid durchströmbare Raum (6, 12, 14, 20, 28) ein Versorgungskanal (12) oder ein Entsorgungskanal (14) ist, der von einem Kühlmittel, Brennmittel oder Oxidationsmittel durchströmbar ist.

6. Brennstoffzelleneinheit (2) nach einem der vorhergehenden Ansprüche,
**gekennzeichnet durch** mehrere solcher von einem Fluid durchströmbaren Räume (6, 12, 14, 20, 28), von denen zumindest ein Raum ein Brennmittelraum (6), zumindest ein Raum ein Oxidationsmittelraum (28), zumindest ein Raum ein Kühlmittelraum (20), zumindest ein Raum ein Versorgungskanal (12) und zumindest ein Raum ein Entsorgungskanal (14) ist.

7. Brennstoffzelleneinheit (2) nach einem der vorhergehenden Ansprüche,
**dadurch gekennzeichnet, dass** zumindest eine Prüföffnung (62) vorgesehen ist, durch die der Überwachungsraum (16) mit seiner Umgebung verbunden ist.

8. Brennstoffzelleneinheit (2) nach einem der vorhergehenden Ansprüche,
**dadurch gekennzeichnet, dass** zumindest eine Verbindungsöffnung (18) vorgesehen ist, durch die der Überwachungsraum (16) mit zumindest einem weiteren Überwachungsraum (16) verbunden ist.

9. Brennstoffzelleneinheit (2) nach Anspruch 8,
**dadurch gekennzeichnet, dass** an der Verbindungsöffnung (18) zumindest ein Messgerät (50, 56), insbesondere ein Druckmessgerät (56) oder ein Gassensor (50), angeschlossen ist.

10. Brennstoffzelleneinheit (2) nach Anspruch 9,
**dadurch gekennzeichnet, dass** das Messgerät (50, 56) mit einem Auswertegerät (54) verbunden ist, das Auswertegerät (54) mit einem elektrisch steuerbaren Ventil (38) einer Brennmittel-Versorgungsleitung (32) verbunden ist und das Auswertegerät (54) zum Steuern dieses Ventils (32) vorbereitet ist.

11. Brennstoffzelleneinheit (2) nach einem der Ansprüche 8 bis 10,
**dadurch gekennzeichnet, dass** eine Pumpe (46) eingangsseitig an einer ersten solchen Verbindungsöffnung (18) und ausgangsseitig an einer zweiten solchen Verbindungsöffnung (18) angeschlossen ist.

12. Brennstoffzelleneinheit (2) nach einem der vorhergehenden Ansprüche,
**dadurch gekennzeichnet, dass** die Primärdichtung (8) und die Sekundärdichtung (10) jeweils als ein Dichtrahmen ausgestaltet sind.

13. Brennstoffzelleneinheit (2) nach einem der vorhergehenden Ansprüche,
**dadurch gekennzeichnet, dass** die Primärdichtung (8) und die Sekundärdichtung (10) im Wesentlichen aus einem spritzgegossenen Elastomer bestehen oder die Primärdichtung (8) und die Sekundärdichtung (10) jeweils durch eine Schweißnaht ausgebildet sind.

14. Verfahren zur Leckageüberwachung einer Brennstoffzelleneinheit (2) gemäß einem der vorhergehenden Ansprüche,
bei dem mittels eines Messgeräts (50, 56) eine Messgröße des Überwachungsraums (16), insbesondere ein Druck oder eine Brennmittelkonzentration im Überwachungsraum (16), gemessen wird.

15. Verfahren nach Anspruch 14,
**dadurch gekennzeichnet, dass** die gemessene Messgröße mittels eines mit dem Messgerät (50, 56) verbundenen Auswertegeräts (54) mit einem Schwellwert verglichen wird und ein elektrisch steuerbares Ventil (38) einer Brennmittel-Versorgungsleitung (32) derart vom Auswertegerät (54) angesteuert wird, dass das Ventil (38) geschlossen wird, sobald die Messgröße den Schwellwert überschreitet.
